# EUROPEAN PATENT APPLICATION

(11) **EP 3 228 651 A1**
(43) Date of publication of application: **11.10.2017**
(21) Application number: 16201006.0
(22) Date of filing: 28.11.2016
(51) Int. Cl.: C08G 69/44

(54) **A METHOD FOR PREPARING POLYESTERAMIDES BY ORGANIC CATALYSIS**

(30) Priority: 08.04.2016 CN 201610219405
(71) Applicant: Nanjing Tech University, Nanjing Jiangsu 210000 (CN)
(72) Inventor: GUO, Kai, Nanjing, Jiangsu 210000 (CN); GONG, Hua, Nanjing, Jiangsu 210000 (CN); ZHU, Ning, Nanjing, Jiangsu 210000 (CN); HU, Xin, Nanjing, Jiangsu 210000 (CN); FANG, Zheng, Nanjing, Jiangsu 210000 (CN); WANG, Haixin, Nanjing, Jiangsu 210000 (CN); ZENG, Wenbo, Nanjing, Jiangsu 210000 (CN)
(74) Representative: Hanna Moore + Curley

(57) **Abstract**

This invention discloses a method for preparing polyesteramides by organocatalysis. The polyesteramides are prepared by a ring-opening polymerization reaction of comonomer under the action of an activator and an initiator, with ε-caprolactone and ε-caprolactam taken as the comonomer, and an I type carbene carboxylate compound or an L type carbene carboxylate compound taken as catalysts. Compared with the prior art, the method for preparing polyesteramides takes carbene as the catalyst and ε-caprolactone and ε-caprolactam as the reaction monomer, therefore, the total yield can reach 91.2%-97.1%, and degradable polyesteramide copolymers with different melting points (Tm) within 50-200°C can be prepared by adjusting the ratio of raw materials in a formula. At the same time, by the tensile test performed at a room temperature of 15 °C, the humidity of 50% and the speed of 200 mm/min, the hot pressed die sheet, which is 1.00 mm thick and 6.00mm wide, and made of the polyesteramides prepared by the method, has the tensile strength between 10 MPa and 60 MPa, and the Young's modulus between 0.1 GPa and 2 GPa.

## Description

### TECHNICAL FIELD

The invention belongs to the technical field of macromolecular material synthesis, and in particular, relates to a preparation method of polyesteramides by organic catalysis.

### BACKGROUND

The aliphatic polyesteramides (PEA) are a new kind of biodegradable macromolecule material. Compared with the aliphatic polyester, the introduction of the amide group leads to the formation of hydrogen bond between the amide groups, so that the polymer has better mechanical properties performance and strength, while the presence of ester bond confers the good biodegradability of the material, which makes it have a wide application prospect. YTokiwa prepared the polyesteramides by the ester-amide bond exchange reaction of polycaprolactone (PCL) and polyamide PA-6, PA-66, PA-612, PA-11 and PA-12, with anhydrous zinc acetate as catalyst, under the high temperature and the protection of nitrogen. The degree of randomness of the polymer increases with the extension of the time of the ester-amide bond exchange reaction. The polyesteramides prepared by this macromolecule reaction method is unstable and has poor reproducibility (J Appl PolymSci, 1979, 24: 1701-1711).

Patents of Timmermann et al. (Bayer), WO9942514 (1999), WO9928371 (1999), DE4327024 (1995) and WO9935179 (1999), have reported to prepare the biodegradable polyesteramides through polycondensation using dibasic acid, dibasic alcohol, diamine and/or caprolactam, etc.. This product has good mechanical properties and biodegradable properties, and a series of such polyesteramides came to the market using BAK as trade mark. However, in this kind of polyesteramides, the ester bond and the amide bond distributed randomly, and this kind of polymers had poor crystallinity, low melting point and poor heat resistance. Additionally, the preparation method used is the direct melting polycondensation method, and it has high requirements for the vacuum, which should be below 0.5mmHg.

U.S. patent No. 4,343,931 (1982) has reported the synthesis of diamido diols using glycolic acid or lactic acid and aliphatic diamines. Then the diamido diols were reacted with diacyl chloride to prepare biodegradable polyesteramides. However, acyl chloride is too lively and easy to corrode the reactor and cause the environmental pollution in this reaction.

In China, Xiaobo Liu,et al. have reported that two diamido diol intermediates were prepared by reacting glycolic acid with 1,12-dodecylenediamine, caprolactone and hexamethylene diamine. Then the diamido diol intermediates was carried out melt polycondensation reaction with the dibasic acid in the certain proportion to prepare the polyesteramides with different molecular weight and thermodynamic properties by adjusting the proportion of two diamide diols. However, this method was also carried out through the direct polycondensation synthesis which requires the high vacuum and the demanding equipment requirements. Additionally, it will easily cause the monomer evaporation loss and make the ratio of raw materials difficult to control under high temperature and high vacuum if preparing polyesteramides using direct polycondensation of binary acid and diamido diols. Therefore, it was difficult to obtain the macromolecular polymers.

Chinese patent, CN1,310,194A(2001), CN1,124,304C(2003), and CN101,020,746A(2007), have reported preparing macromolecular polymers using diisocyanate or bisoxazoline chain extended aliphatic polyester prepolymer. However, the amide bond of polyesteramides prepared by this method had a low content of amide bond, and the thermal and mechanical properties were not improved obviously compared with the aliphatic polyester.

### SUMMARY

The technical problem to be solved by the present invention is to provide a method for preparing polyesteramides by organocatalysis so as to solve the problem that the preparation process of the prior art which is not easy to control and the amide bond content of the product is low..

In order to solve the above technical problems, the technical solution adopted by the invention is as follows: A method for preparing polyesteramides by organocatalysis, and The polyesteramides are prepared by a ring-opening polymerization reaction of comonomer under the action of an activator with epsilon-caprolactone and epsilon-caprolactam taken as the comonomer, and an I type carbene carboxylate compound or an L type carbene carboxylate compound taken as catalysts.

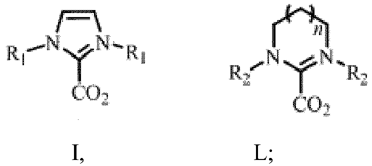

### Wherein:

Wherein:
   R₁ is independently selected from isopropyl alcohol, tert-butyl alcohol, 2,4,6-trimethylphenyl, adamantyl or cyclohexyl.
   R₂ is independently selected from isopropyl alcohol, tert-butyl alcohol, N-heptyl, 2,4,6-trimethylphenyl, 2,6-isopropylphenyl, adamantyl or cyclohexyl.
   n = 0, 1 or 2
Wherein the preferred embodiment is:
   R₁ is isopropyl alcohol, tert-butyl alcohol, 2, 4, 6-trimethylphenyl, adamantyl or cyclohexyl.
   R₂ is isopropyl alcohol, tert-butyl alcohol, N-heptyl, 2, 4, 6-trimethylphenyl, 2, 6-isopropylphenyl, adamantyl or cyclohexyl.

Wherein the structures of the compound (A) and the compound (L) is

| | | | | | |
|---|---|---|---|---|---|
| I-1 | 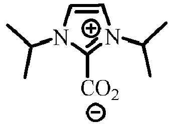 | I-2 | 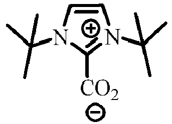 | I-3 | 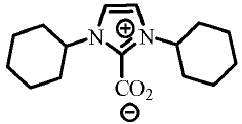 |
| I-4 | 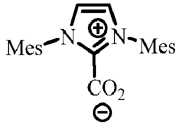 | I-5 | 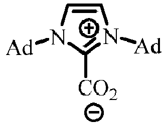 | L-6 | 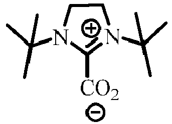 |
| L-7 | 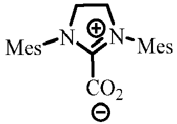 | L-8 | 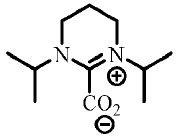 | L-9 | 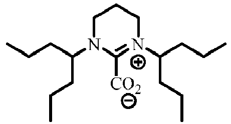 |
| L-10 | 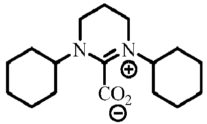 | L-11 | 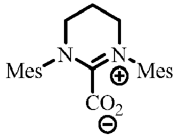 | L-12 | 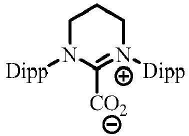 |
| L-13 | 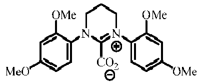 | L-14 | 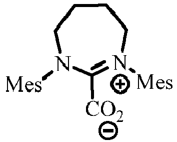 | L-15 | 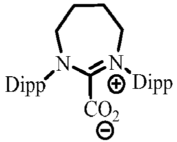 |

In the above structure, Mes is 2,4,6-trimethylphenyl, Dipp is 2,6-isopropylphenyl and Ad is adamantyl.

Wherein the initiator is acyl caprolactam, isocyanates, carbonates, carbamate derivatives, N-acyl structure-containing compounds, isocyanate-containing compounds or ester-containing compounds.

### Wherein:

The isocyanates are tolylene diisocyanate (TDI) or diphenylmethane diisocyanate (MDI);

The carbonate is propylene carbonate (PC), dimethyl carbonate (DMC), diethyl carbonate (DEC), carbonic acid diphenyl carbonate (DPC)

The carbamate derivatives is ethyl carbamate or methyl carbamate.

The compounds containing an N-acyl structure is N-acyl caprolactam, N, N '- (pentane-1,5-diyl) bis (2-azacycloheptane-1-formamide) or N , N (hexane-1,6-diyl) bis (2-azepane-1-carboxamide)

The compounds containing an isocyanate or ester structure is diphenylmethane diisocyanate (MDI), propylene carbonate (PC), dimethyl carbonate (DMC), diethyl carbonate (DEC) or diphenyl carbonate (DPC).

Wherein the mass ratio of the comonomer and the catalyst is 10∼500: 1.

Wherein the molar ratio of the initiator and the catalyst is 0.1∼10: 1.

Wherein the ε-caprolactone accounts for 5∼95% of the total comonomer content.

Wherein the polymerization reaction of anionic polymerization products polycaprolactone is carried out under the protection of an inert gas at 160∼200 °C for 10∼60 min, wherein the inert gas is nitrogen or argon.

Wherein the ε-caprolactam is desiccated at 60 ° C under a vacuum of -0.1; and caprolactone is distilled off with distilled water under reduced pressure before reaction using calcium hydride.

The equation of the present invention is as follows:

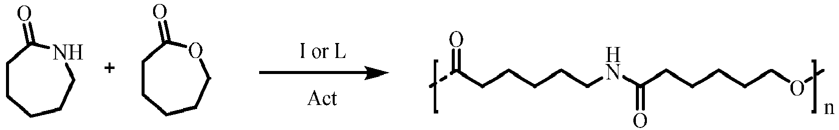

Wherein the compound (L) is L-type carbene carboxylate compound, which can be purchased from the market, or prepared by the following methods:
(1) The primary amines (R-NH2) and triethyl orthoformate are reacted under the catalysis of BF3 • Et2O and monitored by TLC. Then the amide compound is obtained by heating, refluxing and spin desiccation.
   Wherein R is isopropyl, tert-butyl, N-heptyl, 2, 4, 6-trimethylphenyl, 2, 6-isopropylphenyl, adamantyl or cyclohexyl.
(2) The amidine compound obtained above is stirred and reacted in acetonitrile with the dibromoalkane, and then the solvent is evaporated to dryness. The residue of solvent is dissolved by stirring in methylene chloride and filtered, and the yellow liquid is concentrated and recrystallized using diethyl ether. The precipitated pale yellow solid is washed with cold diethyl ether and vacuum dried to obtain the carbene precursor bromide salt.
   Wherein the dibromoalkane is any one of 1,2-dibromoethane, 1,3-dibromopropane and 1,4-dibromobutane.
(3) The carbene precursor bromide salt obtained as described above is dissolved in THF, followed by addition of 1 equivalent of potassium hexamethyldisiloxane or lithium hexamethyldisiloxane or potassium tert-butoxide dissolved in THF. The solution is stirred at room temperature for 2 hours and distilled under reduced pressure, extracted with ether and filtered. CO2 is bubbled into the solution to filter the precipitated solid. Then the L-type carbene carboxylate is obtained through being washed with ether or n-pentane and vacuum drying.

In step (2), the reaction time is 20∼168 h.

In step (3), the molar ratio of carbene precursor bromide salt or potassium hexamethyldisiloxane or lithium hexamethyldisiloxane or potassium tert-butoxide is 1: 1 ∼ 1.2.

The reaction equation is as follows:

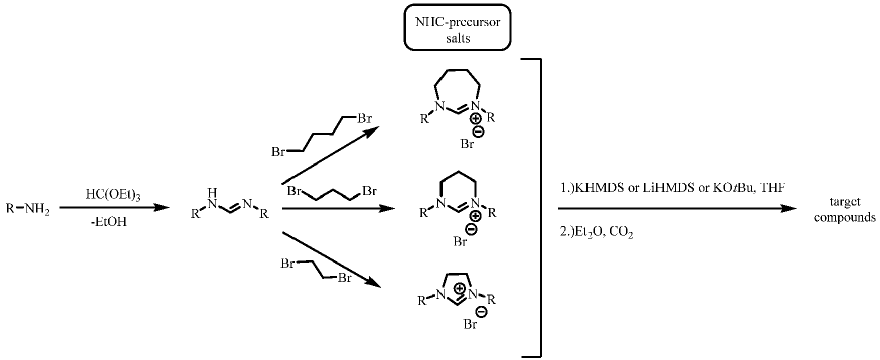

Wherein the compound (I) is I-type carbene carboxylate compound which can be purchased from the market, or prepared by the following methods:
Ethanol, glyoxal (1 equivalent) and primary amine (R-NH2) (2 equivalent) and a few drops of formic acid are to the round flask, and the solution is stirred for 15 hours. The yellow precipitate is formed a few hours later. The round bottom flask is immersed in ice bath and stirred for 30 minutes as well as filtered to obtain the yellow solid.

Wherein R is any one of isopropyl, tert-butyl, 2, 4, 6-trimethylphenyl, adamantyl or cyclohexyl.
(2) The imine obtained above (1 equivalent) is dissolved in ethyl acetate at 0 ° C. Paraformaldehyde (1.3 equivalent) and HCl in dioxane (1.6 equivalent) are stirred in ethyl acetate suspension in the ice bath for 10 minutes, and then added to the imine solution until the solution turns to red. The round bottom flask is removed from the ice bath and the reaction is stirred for an additional 15 hours. The obtained black solution is filtered to white solid which is then washed with diethyl ether. And then the solid is dissolved in acetonitrile and methanol. Sodium hydrogen carbonate is added to this solution to be stirred for 30 minutes, and the sodium hydrogen carbonate is filtered to be removed.
   The solvent is then removed in vacuum. The solid is dissolved in methanol and recrystallized using ethyl ether which is slowly added to methanol to obtain the carbene precursor chloride salt.
(3) The carbene precursor chloride salt obtained as described above is dissolved in THF, followed by addition of 1 equivalent of potassium hexamethyldisiloxane or lithium hexamethyldisiloxane or potassium tert-butoxide dissolved in THF. The solution is stirred at room temperature for 2 hours and distilled under reduced pressure, extracted with ether and filtered. CO2 is bubbled into the solution to filter the precipitated solid. Then the I-type carbene carboxylate is obtained through being washed with ether or n-pentane and vacuum drying.

In step (3), the molar ratio of carbene precursor chloride salt or potassium hexamethyldisiloxane or lithium hexamethyldisiloxane or potassium tert-butoxide is 1: 1 ∼ 1.2.

The reaction equation is as follows:

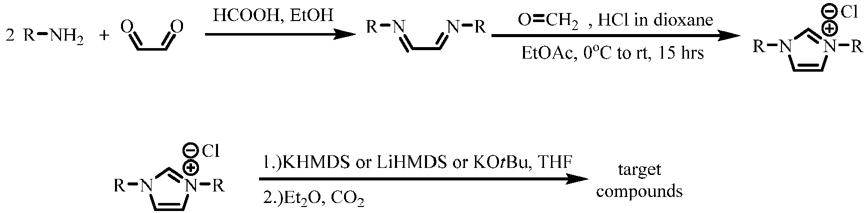

### Beneficial effects

Compared with current technology, the present application comprises following advantages:
The preparation method of the invention uses carbene as the catalyst, the ε-caprolactone and the caprolactam as the reaction monomer, and the total yield is up to 91.2-97.1 %. The preparation of degradable polyesteramides in different melting point (Tm) ranged from 50∼200 °C could be obtained by adjusting the formula ratio of the raw material. At the same time, by the tensile test performed at a room temperature of 15 °C, the humidity of 50% and the speed of 200 mm/min, the hot pressed die sheet, which is 1.00 mm thick and 6.00mm wide, and made of the polyesteramides prepared by the method, has the tensile strength between 10 MPa and 60 MPa, and the Young's modulus between 0.1 GPa and 2 GPa. At the same time, the structure and properties of the products prepared by the present invention have a great relationship with the molar ratio of caprolactam and caprolactone. In comonomer, the melting point of polyesteramides increases, the tensile strength increases and the Young's modulus increases with the increase of the content of caprolactam.

### BRIEF DESCRIPTION OF THE DRAWINGS

Fig. 1 is the ¹H NMR spectrum of the product of polyesteramides in embodiment 1 ;
Fig. 2 is the thermogravimetry analysis of the product of polyesteramides in embodiment 1;

### DETAILED DESCRIPTION

The present invention will be better understood according to the following embodiments. However, it will be readily understood by technicians in this field that the description of the embodiments is only for the purpose of illustrating this invention and should not limit the invention as detailed in the Claims.

In the following embodiments, caprolactam is vacuum dried to remove water in a vacuum pump at 60 ° C before the reaction, and the caprolactone is distilled to remove water using calcium hydride under reduced pressure before the reaction.

In the following embodiments, the tensile strength and Young's modulus of the hot pressed die sheet are measured under the conditions of room temperature 15 °C, humidity 50%, and speed 200 mm / min.

### Embodiment 1

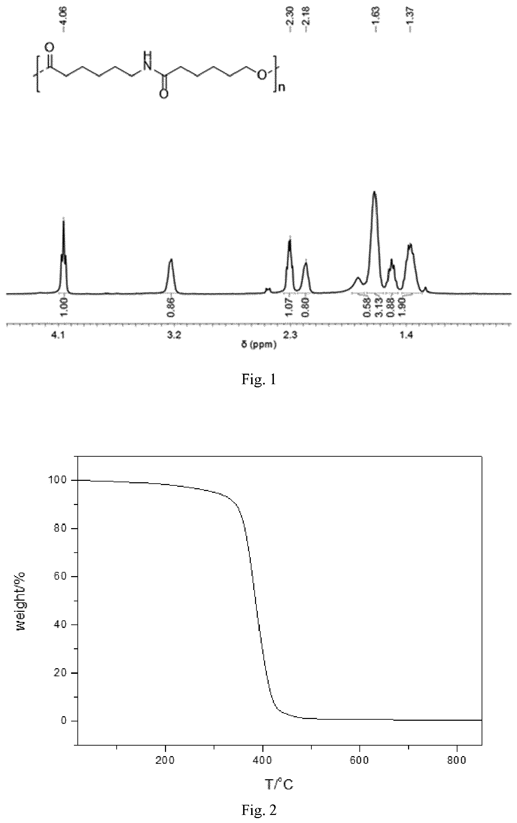

Raw materials of the above polyesteramides, ε-caprolactone (ε-CL) 1.14g (0.01mol), ε- caprolactam (ε-CLa) 1.13g (0.01mol), N- acetyl caprolactam 0.0155g (0.0001 mol) and 1,3-diisopropylimidazole-2-carboxylate (1-1) about 0.5wt%, are introduced into the ampoule. The atmosphere of ampoule is replaced with nitrogen, and the temperature is raised to 180 °C to be incubated for 1 hour in order to obtain the P (CL / CLa) 50/50 polyesteramide. The reaction yield is 92.3%. The melting point (Tm) of the obtained product is 86.3 °C. And the hot pressed die sheet, which is 1.00 mm thick and 6.00 mm wide has the strength of 40.2 MPa and Young's modulus of 271 MPa. The ¹H NMR spectrum of the polyesteramides is shown in Fig. 1, and the thermogravimetric analysis of the polyesteramides is shown in Fig 2.

### Embodiment 2:

Raw materials of the above polyesteramides, ε-caprolactone (ε-CL) 1.14g (0.01mol), ε- caprolactam (ε-CLa) 0.565g (0.005mol), N, N '- (pentane-1,5-diyl) bis (2-azepane-1-carboxamide) 0.076g (0.0002mol) and 1,3-di tert butyl imidazole-2-carboxylate (1-2) about 0.2wt%, are introduced into the ampoule. The atmosphere of ampoule is replaced with argon, and the temperature is raised to 170 °C to be incubated for 30 minutes in order to obtain the P (CL / CLa) 66/33 polyesteramides. The reaction yield is 94.7%. The melting point (Tm) of the obtained product is 57.7 °C. And the hot pressed die sheet, which is 1.00 mm thick and 6.00 mm wide has the strength of 31.9 MPa and Young's modulus of 196 MPa.

### Embodiment 3:

Raw materials of the above polyesteramides, ε-caprolactone (ε-CL) 0.57g (0.005mol), ε- caprolactam (ε-CLa) 1.13g (0.01mol), N, N '- (hexane-1,6-diyl) bis (2-azepane-1-carboxamide) 0.197g (0.0005 mol) and 1,3-dicyclohexylimidazole-2-carboxylate (1-3) about 1 wt%, are introduced into the ampoule. The atmosphere of ampoule is replaced with nitrogen, and the temperature is raised to 160 °C to be incubated for 20 minutes in order to obtain the P (CL / CLa) 33/66 polyesteramides. The reaction yield is 91.2%. The melting point (Tm) of the obtained product is 152.3 °C. And the hot pressed die sheet, which is 1.00 mm thick and 6.00 mm wide has the strength of 46.9 MPa and Young's modulus of 302 MPa.

### Embodiment 4:

Raw materials of the above polyesteramides, ε-caprolactone (ε-CL) 1.14g (0.01mol), ε- caprolactam (ε-CLa) 3.39g (0.03mol), tolylene diisocyanate 0.0087g (0.00005mol) and 1,3-bis (2,4,6-trimethylphenyl) imidazole-2-carboxylate (1-4) about 2wt%, are introduced into the ampoule. The atmosphere of ampoule is replaced with nitrogen, and the temperature is raised to 190 °C to be incubated for 10 minutes in order to obtain the P (CL / CLa) 25/75 polyesteramides. The reaction yield is 93.4%. The melting point (Tm) of the obtained product is 161.3 °C. And the hot pressed die sheet, which is 1.00 mm thick and 6.00 mm wide has the strength of 48.2 MPa and Young's modulus of 427 MPa.

### Embodiment 5:

Raw materials of the above polyesteramides, ε-caprolactone (ε-CL) 0.57g (0.005mol), ε- caprolactam (ε-CLa) 2.26g (0.02mol), diphenylmethane diisocyanate 0.25g (0.001mol) and 1,3-bisadamantylimidazole-2-carboxylate (I-5) about 3wt%, are introduced into the ampoule. The atmosphere of ampoule is replaced with argon, and the temperature is raised to 170 °C to be incubated for 15 minutes in order to obtain the P (CL / CLa) 20/80 polyesteramides. The reaction yield is 95.8%. The melting point (Tm) of the obtained product is 170.3 °C. And the hot pressed die sheet, which is 1.00 mm thick and 6.00 mm wide has the strength of 49.8 MPa and Young's modulus of 784 MPa.

### Embodiment 6:

Raw materials of the above polyesteramides, ε-caprolactone (ε-CL) 0.57g (0.005mol), ε- caprolactam (ε-CLa) 2.825g (0.025mol), propylene carbonate 0.0102g (0.0001 mol) and 1,3-diisopropyl imidazoline-2-carboxylate (L-6) about 5wt%, are introduced into the ampoule. The atmosphere of ampoule is replaced with nitrogen, and the temperature is raised to 180 °C to be incubated for 40 minutes in order to obtain the P (CL / CLa) 16.7/83.3 polyesteramides. The reaction yield is 93.2%. The melting point (Tm) of the obtained product is 183.1 °C. And the hot pressed die sheet, which is 1.00 mm thick and 6.00 mm wide has the strength of 62.3 MPa and Young's modulus of 1.1 GPa.

### Embodiment 7:

Raw materials of the above polyesteramides, ε-caprolactone (ε-CL) 0.57g (0.005mol), ε- caprolactam (ε-CLa) 3.955g (0.035mol), dimethyl carbonate 0.045g (0.0005mol) and 1,3-bis (2,4,6-trimethylphenyl) imidazoline-2-carboxylate (L-7) about 10wt%, are introduced into the ampoule. The atmosphere of ampoule is replaced with nitrogen, and the temperature is raised to 190 °C to be incubated for 1 hour in order to obtain the P (CL / CLa) 12.5/87.5 polyesteramides. The reaction yield is 92.4%. The melting point (Tm) of the obtained product is 191.7 °C. And the hot pressed die sheet, which is 1.00 mm thick and 6.00 mm wide has the strength of 74.7 MPa and Young's modulus of 1.4 GPa.

### Embodiment 8:

Raw materials of the above polyesteramides, ε-caprolactone (ε-CL) 0.57g (0.005mol), ε- caprolactam (ε-CLa) 4.52g (0.04mol), diethyl carbonate 0.0354g (0.0003mol) and 1,3-diisopropyl tetrahydropyridine-2-carboxylate (L-8) about 10wt%, are introduced into the ampoule. The atmosphere of ampoule is replaced with argon, and the temperature is raised to 200°C to be incubated for 30 minutes in order to obtain the P (CL / CLa) 11.1/88.9 polyesteramides. The reaction yield is 95.7%. The melting point (Tm) of the obtained product is 195.9 °C. And the hot pressed die sheetwhich is 1.00 mm thick and 6.00 mm wide has the strength of 89.3MPa and Young's modulus of 1.6GPa.

### Embodiment 9:

Raw materials of the above polyesteramides, ε-caprolactone (ε-CL) 0.342g (0.003mol), ε- caprolactam (ε-CLa) 6.441g (0.057mol), diphenyl carbonate 0.0214g (0.0001mol) and 1,3-bis (4-heptyl) tetrahydropyridine-2-carboxylate (L-9) about 5wt%, are introduced into the ampoule. The atmosphere of ampoule is replaced with nitrogen, and the temperature is raised to 200°C to be incubated for 1 hour in order to obtain the P (CL / CLa) 5/95 polyesteramides. The reaction yield is 94.8%. The melting point (Tm) of the obtained product is 200.0 °C. And the hot pressed die sheetwhich is 1.00 mm thick and 6.00 mm wide has the strength of 100.0 MPa and Young's modulus of 2 GPa.

### Embodiment 10:

Raw materials of the above polyesteramides, ε-caprolactone (ε-CL) 1.71g (0.015mol), ε-caprolactam (ε-CLa) 0.065g (0.005mol), ethyl carbamate 0.0178g (0.0002mol) and 1,3-dicyclohexyltetrahydropyridine-2-carboxylate (L-10) about 1wt%, are introduced into the ampoule. The atmosphere of ampoule is replaced with nitrogen, and the temperature is raised to 160°C to be incubated for 10 minutes in order to obtain the P (CL / CLa) 75/25 polyesteramides. The reaction yield is 93.5%. The melting point (Tm) of the obtained product is 52.5 °C. And the hot pressed die sheet, which is 1.00 mm thick and 6.00 mm wide has the strength of 30.2 MPa and Young's modulus of 185 MPa.

### Embodiment 11:

Raw materials of the above polyesteramides, ε-caprolactone (ε-CL) 2.28g (0.02mol), ε- caprolactam (ε-CLa) 0.065g (0.005mol), methyl carbamate 0.075g (0.001mol) and 1,3-bis (2,4,6-trimethylphenyl) tetrahydropyridine-2-carboxylate (L-11) about 0.5wt%, are introduced into the ampoule. The atmosphere of ampoule is replaced with nitrogen, and the temperature is raised to 180°C to be incubated for 40 minutes in order to obtain the P (CL / CLa) 80/20 polyesteramides. The reaction yield is 95.4%. The melting point (Tm) of the obtained product is 51.7 °C. And the hot pressed die sheet, which is 1.00 mm thick and 6.00 mm wide has the strength of 28.7 MPa and Young's modulus of 174 MPa.

### Embodiment 12:

Raw materials of the above polyesteramides, ε-caprolactone (ε-CL) 2.85g (0.025mol), ε- caprolactam (ε-CLa) 0.065g (0.005mol), N- acetyl caprolactam 0.031g (0.0002mol) and 1,3-bis (2,6-isopropylphenyl) tetrahydropyridine-2-carboxylate (L-12) about 2wt%, are introduced into the ampoule. The atmosphere of ampoule is replaced with nitrogen, and the temperature is raised to 190 °C to be incubated for 30 minutes in order to obtain the P (CL / CLa) 83.3/16.7 polyesteramides. The reaction yield is 96.1%. The melting point (Tm) of the obtained product is 51.4 °C. And the hot pressed die sheet, which is 1.00 mm thick and 6.00 mm wide has the strength of 25.1 MPa and Young's modulus of 161 MPa.

### Embodiment 13:

Raw materials of the above polyesteramides, ε-caprolactone (ε-CL) 3.99g (0.035mol), ε- caprolactam (ε-CLa) 0.065g (0.005mol), N- acetyl caprolactam 0.0465g (0.0003mol) and 1,3-bis (2,4-dimethoxyphenyl) tetrahydropyridine-2-carboxylate (L-13) about 3wt%, are introduced into the ampoule. The atmosphere of ampoule is replaced with nitrogen, and the temperature is raised to 200 °C to be incubated for 10 minutes in order to obtain the P (CL / CLa) 87.5/12.5 polyesteramides. The reaction yield is 92.8%. The melting point (Tm) of the obtained product is 52.0 °C. And the hot pressed die sheet, which is 1.00 mm thick and 6.00 mm wide has the strength of 20.8 MPa and Young's modulus of 132 MPa.

### Embodiment 14:

Raw materials of the above polyesteramides, ε-caprolactone (ε-CL) 4.56g (0.04mol), ε- caprolactam (ε-CLa) 0.065g (0.005mol), N- acetyl caprolactam 0.155g (0.001mol) and 1,3-bis (2,4,6-trimethylphenyl) tetrahydrodiazepine-2-carboxylate (L-14) about 0.5wt%, are introduced into the ampoule. The atmosphere of ampoule is replaced with nitrogen, and the temperature is raised to 190 °C to be incubated for 20 minutes in order to obtain the P (CL / CLa) 88.9/11.1 polyesteramides. The reaction yield is 97.1%. The melting point (Tm) of the obtained product is 51.8 °C. And the hot pressed die sheet, which is 1.00 mm thick and 6.00 mm wide has the strength of 15.6 MPa and Young's modulus of 124 MPa.

### Embodiment 15:

Raw materials of the above polyesteramides, ε-caprolactone (ε-CL) 5.13g (0.045mol), ε- caprolactam (ε-CLa) 0.065g (0.005mol), N- acetyl caprolactam 0.0775g (0.0005mol) and 1,3-bis (2,6-isopropylphenyl) tetrahydrodiazepine-2-carboxylate (L-15) about 2wt%, are introduced into the ampoule. The atmosphere of ampoule is replaced with nitrogen, and the temperature is raised to 180 °C to be incubated for 1 hour in order to obtain the P (CL / CLa) 95/5 polyesteramides. The reaction yield is 93.4%. The melting point (Tm) of the obtained product is 51.2 °C. And the hot pressed die sheet, which is 1.00 mm thick and 6.00 mm wide has the strength of 10.0 MPa and Young's modulus of 117 MPa.

## Claims

1. A method for preparing polyesteramides, **characterized in that** the polyesteramides are prepared by a ring-opening polymerization reaction of comonomer, with the ε- caprolactone and ε-caprolactam as comonomer, and compound (I) or (L) as a catalyst, under the action of an activator;. 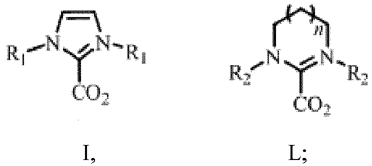 Wherein:
R₁ is independently selected from isopropyl alcohol, tert-butyl alcohol, 2,4,6-trimethylphenyl, adamantyl or cyclohexyl.
R₂ is independently selected from isopropyl alcohol, tert-butyl alcohol, N-heptyl, 2,4,6-trimethylphenyl, 2,6-isopropylphenyl, adamantyl or cyclohexyl.
n = 0, 1 or 2.

2. The preparation method according to Claim 1, **characterized in that**, the initiator is acyl caprolactam, isocyanates, carbonates, carbamate derivatives, N-acyl structure-containing compounds, isocyanate-containing compounds or ester-containing compounds.

3. The preparation method according to Claim 1, **characterized in that**, the mass ratio of the comonomer and the catalyst is 10∼500: 1.

4. The preparation method according to Claim 1, **characterized in that**, the molar ratio of the initiator and the catalyst is 0.1∼10: 1.

5. The preparation method according to Claim 1, **characterized in that**, the ε-caprolactone accounts for 5∼95% of the total comonomer substance.

6. The preparation method according to Claim 1, **characterized in that**, the reaction is carried out under the protection of an inert gas at 160∼200 °C for 10∼60 min; wherein the inert gas is nitrogen gas or air.
